# EUROPEAN PATENT APPLICATION

(11) **EP 1 990 885 A2**
(43) Date of publication of application: **12.11.2008**
(21) Application number: 08151900.1
(22) Date of filing: 25.02.2008
(51) Int. Cl.: H02J 3/00, H02J 1/00

(54) **Grid-connected fuel cell system and load using the same**

(30) Priority: 16.03.2007 KR 20070026039
(71) Applicant: Samsung Electronics Co., Ltd., Suwon-si, Gyeonggi-do 442-743 (KR)
(72) Inventor: Choi, See Young, Yeongtong-dong, Suwon-si Gyeonggi-do (KR); Ji, Jun Ho, Gyeonggi-do (KR); Wu, Seong Je, Dongan-gu, Anyang-si Gyeonggi-do (KR)
(74) Representative: Grünecker, Kinkeldey, Stockmair & Schwanhäusser Anwaltssozietät

(57) **Abstract**

The system includes a fuel cell to generate DC electricity by reacting oxygen with fuel, an inverter to convert the DC electricity generated by the fuel cell to AC electricity, a DC output terminal to output the DC electricity, and an AC output terminal to output the AC electricity, the AC output terminal being connected to an electricity system.

## Description

### BACKGROUND

### 1. Field

The present invention relates to a grid-connected fuel cell system and a load using the same, and more particularly, to a grid-connected fuel cell system, which outputs not only AC electricity but also DC electricity, and a load using the same.

### 2. Description of the Related Art

A fuel cell system is an apparatus that converts chemical energy generated through oxidation of fuel to electric energy. A grid-connected fuel cell system is a fuel cell system, the output of which is connected to an electricity system.

Korean Patent Application Publication No. 2005-0072328 describes a conventional grid-connected fuel cell system that includes an oxygen supply, a fuel gas supply, a fuel cell, a power converter, a control power supply, and a system power supply. The fuel cell reacts oxygen supplied from the oxygen supply with a fuel gas supplied from the fuel gas supply to generate a DC current. The power converter converts the DC current generated by the fuel cell to an AC current and supplies the AC current to a load. The control power supply supplies power to the oxygen supply and the fuel gas supply. The system power supply supplies commercial power to the load.

In the conventional fuel cell system, the load is driven by the AC current into which the power converter converts the DC current generated by the fuel cell.

However, since the conventional grid-connected fuel cell system outputs the AC current alone, it is necessary for a DC load, which uses a DC current, to convert the AC current back to a DC current. This process causes a number of problems such as an increase in the cost and an increase in the power loss.

That is, the DC load needs to include a rectifier that converts AC current to DC current, which increases the manufacturing cost. Using the rectifier in the DC load also causes high harmonics, which reduce the power factor and cause a skin effect, thereby reducing the power transfer efficiency.

In addition, a large power loss occurs due to the two conversion processes, the first process converting the DC current generated by the fuel cell to an AC current and the second process rectifying the AC current back to a DC current at the DC load.

### SUMMARY

Therefore, it is an aspect of the invention to provide a grid-connected fuel cell system, which outputs both AC electricity and DC electricity, and a load using the same.

Additional aspects and/or advantages of the invention will be set forth in part in the description which follows and, in part, will be apparent from the description, or may be learned by practice of the invention.

The foregoing and/or other aspects of the present invention may be achieved by providing a grid-connected fuel cell system including a fuel cell to generate DC electricity by reacting oxygen with fuel; an inverter to convert the DC electricity generated by the fuel cell to AC electricity; a DC output terminal to output the DC electricity; and an AC output terminal to output the AC electricity, the AC output terminal being connected to an electricity system.

The grid-connected fuel cell system may further include a converter to convert the DC electricity generated by the fuel cell to DC electricity with a different voltage and then to provide the converted DC electricity to the inverter, wherein the DC output terminal is connected to an output terminal of the converter and outputs the DC electricity converted by the converter.

The foregoing and/or other aspects of the present invention may also be achieved by providing a load using a grid-connected fuel cell system, wherein the grid-connected fuel cell system generates DC electricity by reacting oxygen with fuel and converts the generated DC electricity to AC electricity and has a DC output terminal to output the DC electricity and an AC output terminal to output the AC electricity, the AC output terminal being connected to an electricity system, the load including a DC load connected to the DC output terminal, the DC load having no rectifier; and an AC load connected to the AC output terminal.

The DC load may include an inverter motor or a Switching Mode Power Supply (SMPS) type DC load.

The grid-connected fuel cell system converts the DC electricity to DC electricity with a different voltage and then converts the converted DC electricity to the AC electricity, and the DC output terminal outputs the converted DC electricity.

### BRIEF DESCRIPTION OF THE DRAWINGS

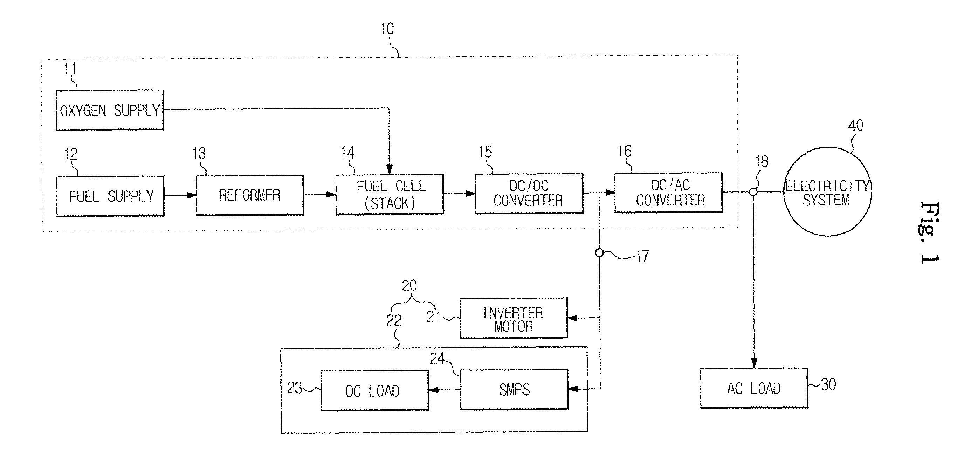

These and/or other aspects and advantages of the invention will become apparent and more readily appreciated from the following description of the embodiments, taken in conjunction with the accompanying drawing:
The drawing is a block diagram of a grid-connected fuel cell system and a load using the same according to an embodiment of the present invention.

### DETAILED DESCRIPTION OF THE EMBODIMENTS

Reference will now be made in detail to the embodiments of the present invention, an example of which is illustrated in the accompanying drawing. The embodiments are described below to explain the present invention by referring to the figure.

As shown in the drawing, a grid-connected fuel cell system and a load using the same according to an embodiment of the present invention includes a fuel cell system 10 that reacts fuel with oxygen to generate electricity, a DC load 20 and an AC load 30 connected to the fuel cell system 10, and an electricity system 40 connected to the fuel cell system 10 and the AC load 30.

The fuel cell system 10 includes an oxygen supply 11, a fuel supply 12, a reformer 13, a fuel cell 14, a DC/DC converter 15, a DC/AC converter (or inverter) 16, a DC output terminal 17, and an AC output terminal 18. The oxygen supply 11 supplies oxygen to the fuel cell 14 and the fuel supply 12 supplies fuel to the reformer 13. This fuel may be gaseous fuel such as natural gas or methane or liquid fuel such as methanol or hydrazine.

The reformer 13 generates hydrogen by heating fuel and provides it to the fuel cell 14. A detailed description of a reaction mechanism of the reformer 13 is omitted here since it is widely known (see, for example, Korean Patent Application Publication No. 2003-0072908).

The fuel cell 14 includes a number of unit cells (stack) (not shown). Each unit cell includes an electrolyte membrane containing electrolyte (not shown), an air electrode (cathode) (not shown), and a fuel electrode (anode) (not shown). When hydrogen is supplied to the fuel electrode, it is separated into hydrogen ions and electrons. The hydrogen ions are moved to the air electrode through the electrode membrane and the electrons are moved to the air electrode through an external circuit. In the air electrode, oxygen supplied to it reacts with hydrogen ions to form water. Thus, the unit cell generates DC electricity by reacting oxygen with hydrogen and also generates heat due to the reaction.

The DC/DC converter 15 boosts and provides DC electricity generated by the fuel cell 14 to the DC/AC converter 16. Since the DC electricity output from the fuel cell 14 has a low voltage and varies over a wide range, the DC/DC converter 15 is used to obtain a stable high voltage. The DC/AC converter 16 converts the DC electricity boosted by the DC/DC converter 15 into AC electricity.

The DC output terminal 17, which is connected to an output terminal of the DC/DC converter 15, outputs the DC electricity boosted by the DC/DC converter 15. The AC output terminal 18, which is an output terminal of the DC/AC converter 16, is connected to the electricity system 40.

The DC load 20 is a load that uses DC electricity. Typical examples of the DC load 20 include an inverter motor 21 and a Switching Mode Power Supply (SMPS) type DC load 22. A conventional inverter motor uses AC electricity having a specific frequency into which an inverter converts DC electricity that a rectifier generates by rectifying AC electricity supplied by the electricity system 40 or the fuel cell system 10.

However, the inverter motor 21 according to the present invention has no rectifier that rectifies AC electricity and instead is connected to the DC output terminal 17 of the fuel cell system 10 to receive DC electricity directly from the fuel cell system 10.

A conventional SMPS type DC load includes an SMPS having a rectifier and a DC load. The conventional SMPS type DC load is driven by DC electricity that the rectifier generates by rectifying AC electricity supplied by the electricity system 40 or the fuel cell system 10.

However, the SMPS 24 in the SMPS type DC load 22 has no rectifier and instead is connected to the DC output terminal 17 of the fuel cell system 10 to receive DC electricity directly from the fuel cell system 10 as with the inverter motor 21 described above. The DC electricity is delivered from the SMPS 24 to the DC load 23 without undergoing a rectifying process.

The AC load 30, which is driven by AC electricity, is connected to the AC output terminal 18. The AC load 30 receives AC electricity from the fuel cell system 10 and additionally receives AC electricity in the amount by which the AC load 30 is short of AC electricity, from the electricity system 40 if it cannot be driven by the AC electricity from the fuel cell system 10 alone.

The following is a detailed description of how the grid-connected fuel cell system and the loads according to the embodiment of the present invention operate. The fuel supply 12 supplies fuel to the reformer 13. The reformer 13 then extracts hydrogen from the fuel and provides it to the fuel cell 14. The fuel cell 14 reacts the hydrogen with oxygen supplied from the oxygen supply 11 to generate DC electricity and provides the DC electricity to the DC/DC converter 15.

The DC/DC converter 15 boosts and provides the DC electricity to the DC/AC converter 16. Since the DC output terminal 17 is connected to the output terminal of the DC/DC converter 15, the DC output terminal 17 outputs the DC electricity boosted by the DC/DC converter 15. The output DC electricity is provided to the inverter motor 21 and the SMPS type DC load 22 to drive the inverter motor 21 and the SMPS type DC load 22.

The DC/AC converter 16 converts the DC electricity to AC electricity and outputs the AC electricity to the AC output terminal 18. Thus, the AC electricity is provided to the AC load 30 connected to the AC output terminal 18 and the AC load 30 is driven by this AC electricity.
Since the fuel cell system 10, the AC load 30, and the electricity system 40 are connected to each other, the electricity system 40 supplies AC electricity in the amount by which the AC load 30 is short of AC electricity, to the AC load 30 if the AC load 30 cannot be driven by the AC electricity output from the fuel cell system 10 alone. On the other hand, if the AC electricity output from the fuel cell system 10 still remains after being used to drive the AC load 30, the remaining AC electricity is provided to the electricity system 40.

As is apparent from the above description, the grid-connected fuel cell system according to the present invention has a DC output terminal so that, to supply power to a DC load, it is not necessary to perform the two conversion processes between AC electricity and DC electricity as in the related art, thereby reducing power loss due to the conversion processes.

In addition, according to the present invention, since the DC load performs no rectifying process, the occurrence of harmonics is reduced and the DC load does not need to have a rectifier, thereby reducing the manufacturing cost of the DC load.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A grid-connected fuel cell system comprising:
a fuel cell to generate DC electricity by reacting oxygen with fuel;
an inverter to convert the DC electricity generated by the fuel cell to AC electricity;
a DC output terminal to output the DC electricity; and
an AC output terminal to output the AC electricity, the AC output terminal being connected to an electricity system.

2. The grid-connected fuel cell system according to claim 1, further comprising:
a converter to convert the DC electricity generated by the fuel cell to DC electricity with a different voltage and then to provide the converted DC electricity to the inverter,
wherein the DC output terminal is connected to an output terminal of the converter and outputs the DC electricity converted by the converter

3. A load using a grid-connected fuel cell system, wherein the grid-connected fuel cell system generates DC electricity by reacting oxygen with fuel and converts the generated DC electricity to AC electricity and has a DC output terminal to output the DC electricity and an AC output terminal to output the AC electricity, the AC output terminal being connected to an electricity system,
the load including:
a DC load connected to the DC output terminal, the DC load having no rectifier; and
an AC load connected to the AC output terminal.

4. The load according to claim 3, wherein the DC load includes an inverter motor or a Switching Mode Power Supply (SMPS) type DC load.

5. The load according to claim 3, wherein the grid-connected fuel cell system converts the DC electricity to DC electricity with a different voltage and then converts the converted DC electricity to the AC electricity, and the DC output terminal outputs the converted DC electricity.

6. A load using a grid-connected fuel cell system, the grid-connected fuel cell system generating DC electricity by reacting oxygen with fuel and converting the generated DC electricity to AC electricity and having a DC output terminal to output the DC electricity and an AC output terminal to output the AC electricity, the AC output terminal being connected to an electricity system, the load consisting essentially of:
a DC load connected to the DC output terminal; and
an AC load connected to the AC output terminal.
